# EUROPEAN PATENT SPECIFICATION

(11) **EP 3 805 083 B1**
(45) Date of publication and mention of the grant of the patent: **17.01.2024**
(21) Application number: 19814434.7
(22) Date of filing: 26.03.2019
(51) Int. Cl.: B62K 15/00, B62J 43/28, B62K 25/28, B62M 6/65, B62J 43/13

(54) **TRI-FOLDING ELECTRIC BICYCLE**
DREIFACH FALTBARES ELEKTRISCHES FAHRRAD
BICYCLETTE ÉLECTRIQUE PLIABLE EN TROIS

(30) Priority: 07.06.2018 CN 201810582181
(43) Date of publication of application: 14.04.2021
(73) Proprietor: Li, Zhipeng, Tianjin 300040 (CN)
(72) Inventor: LI, Xiru, Tianjin 300040 (CN)
(74) Representative: Laufhütte, Dieter
(86) International application number: PCT/CN2019/079605
(87) International publication number: WO 2019/233164

(56) References cited:
- EP-A1- 1 582 451
- EP-A1- 2 221 205
- CN-A- 107 117 244
- CN-A- 108 068 964
- CN-A- 108 657 355
- CN-U- 206 516 683
- CN-U- 206 516 683
- CN-U- 207 060 282
- CN-U- 207 060 282
- CN-U- 208 278 249
- JP-A- 2011 201 372

## Description

### I. Field of Invention

The present invention relates to a means of transportation, in particular, a tri-folding electric bicycle.

### II. Background Art

Folding electric bicycles are electric bikes which can be folded into a smaller size for easy storage. They can be divided into 3 types: horizontal, vertical and M-shaped folding bicycles. Generally, folding electric bicycles are designed with a folding frame and a folding stem. When the folding frame is folded, the front and rear wheels are together to reduce the length by about 45%. When folded, the electric bicycle can be put into a luggage case or a folding bag, or a car trunk. Featuring a two-folding structure, most current folding electric bicycles on the market are relatively huge and inconvenient to handle. The huge battery pack is inconvenient to handle and offers poor performance. Furthermore, the wires exposed on the frame are complicated and unsafe. After retrieval, it's found that an easy-to-handle and more compact tri-folding electric bicycle is mentioned in the patent numbered 201720890916.8 Folding Bicycle. On this basis, therefore, we hereby propose a new easy-to-handle and safer tri-folding structure offering excellent battery performance with no wires exposed on the frame for folding electric bicycles Document CN207060282U shows the preamble of claim 1.

### III. Description of Invention

To overcome the shortcomings of existing means of transportation, this invention provides a tri-folding electric bicycle. The technical proposal of this invention is realized as follows.

A tri-folding electric bicycle in this proposal according to claim 1 comprises a front wheel, a rear wheel, a front mudguard, a rear mudguard, and a front triangular frame and a rear triangular frame connected into one; the front triangular frame comprises a main tube, a branch tube and a middle tube connected triangularly. The rear triangular frame comprises a seat stay, a chain stay and a middle stay connected triangularly. The main tube is arranged with a folding clasp near the front wheel. The front triangular frame and rear triangular frame are connected through a rotating shaft and a connector. The folding clasp divides the main tube into a battery compartment and a control compartment. The battery compartment is arranged with a battery holder of a similar shape and a battery pack is provided in the battery holder. Within the control compartment is a controller. The front wheel is arranged with a motor at the hub. The motor and controller are electrically connected, so are the controller and the battery pack within the battery holder.

A battery cover is arranged at the opening of the battery compartment; a control cover is arranged at the opening of the control compartment; the battery cover is fixed to the battery holder; on the battery cover is a female terminal and a charging input port. Both the female terminal and charging input port are electrically connected to the battery pack in the battery holder.

On the control cover is a male tab to be used with the female terminal. The male tab is electrically connected to the controller.

The battery structure for the battery pack in the battery holder is a dual-parallel and decuple-serial structure of 3.65V 18650 cells.

A double-layer lithium-ion battery protection circuit is arranged on the top of the battery holder to protect the battery pack circuit.

The present invention has the advantages that the simple structure facilitates tri-folding function and a smaller size for easy storage; the battery pack has a rational structure and high performance, and simple circuit connection has avoided wiring on the frame to offer higher safety.

### IV Brief Description of the Drawings

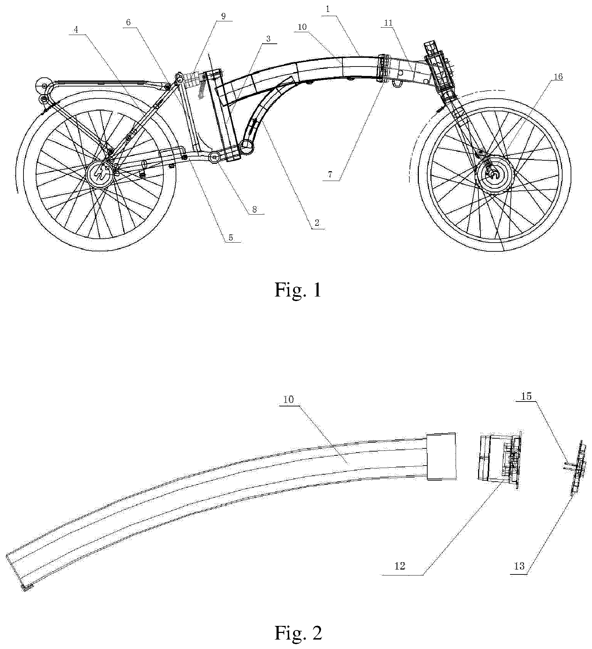

Fig. 1 is a structure diagram of this invention.
Fig. 2 is a structure diagram of the battery pack of this invention.

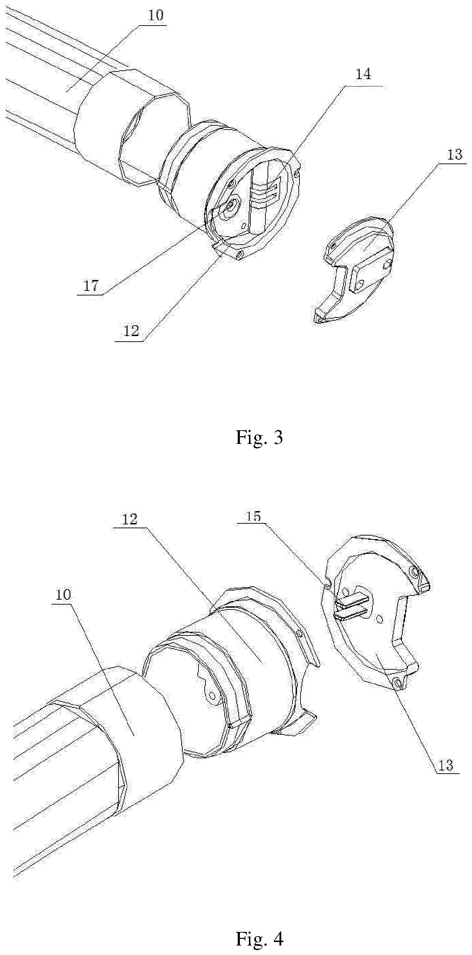

Fig. 3 is an enlarged (forward) structure diagram of the battery pack of this invention.
Fig. 4 is an enlarged (reverse) structure diagram of the battery pack of this invention.

### V. Detailed Description of Preferred Embodiment

Here is an introduction to the preferred embodiments of this invention.

The tri-folding electric bicycle, as shown in the figures, comprises a front wheel, a rear wheel, a front mudguard, a rear mudguard, and a front triangular frame and a rear triangular frame connected into one. The front triangular frame comprises a main tube 1, a branch tube 2 and a middle tube 3 connected triangularly. The rear triangular frame comprises a seat stay 4, a chain stay 5 and a middle stay 6 connected triangularly. The main tube 1 is arranged with a folding clasp 7 near the front wheel. The front triangular frame and rear triangular frame are connected through a rotating shaft 8 and a connector 9. The folding clasp 7 divides the main tube 1 into a battery compartment and a control compartment. The battery compartment is arranged with a battery holder 10 of a similar shape and a battery pack is provided in the battery holder. Within the control compartment is a controller 11. The front wheel is arranged with a motor 16 at the hub. The motor 16 and controller 11 are electrically connected, so are the controller 11 and the battery pack within the battery holder 10.

A battery cover 12 is arranged at the opening of the battery compartment; a control cover 13 is arranged at the opening of the control compartment; the battery cover 12 is fixed to the battery holder 10; on the battery cover 12 are a female terminal 14 and a charging input port 17; both the female terminal 14 and charging input port 17 are electrically connected to the battery pack in the battery holder 10.

On the control cover 13 is a male tab 15 to be used with the female terminal 14. Male tab 14 is electrically connected to the controller 11.

The battery structure for the battery pack in the battery holder 10 is a dual-parallel and decuple-serial structure of 3.65V 18650 cells.

A double-layer lithium-ion battery protection circuit is arranged on the top of the battery holder to protect the battery pack circuit.

The working process of this embodiment: the tri-folding structure of the front triangular frame and rear triangular frame is realized through folding clasp 7, rotating shaft 8 and connector 9 when this invention is used, so that it will have a smaller size for easy storage and carrying. When the folding clasp is opened, the main tube 1 will be folded, the female terminal 14 and male tab 15 will be separated, and the battery pack in the battery holder 10 will cut off the power supply, and circuit of controller 11 disconnected; when the main tube 1 is unfolded, the male tab 15 will be inserted into the female terminal 14, and the folding clasp 7 can be closed; and the circuit between the battery pack and controller 11 and motor 16 will be connected to motorized the electric bicycle. Realizing the opening and closing of the circuit in this way can prevent the exposure of circuit on the frame, extending the service life and enhancing the safety level. The battery structure for the battery pack in the battery holder 10 is a dual-parallel and decuple-serial structure of 3.65V 18650 cells, which will generate the maximum current under the maximum voltage of dual-parallel 36.5V and effectively enhance the performance of the battery pack. When charging, the folding clasp 7 can be opened and main tube 1 folded to charge the battery pack in the battery holder 10 through the charging input port 17. The charging input port 17 is provided with a DC2.1V charging input terminal and offers excellent charging performance. The battery cover 12 and battery holder 10 can be pulled out for separate charging as well, which is quicker and more convenient.

Elaborated above is an embodiment of this invention.

## Claims

1. A tri-folding bicycle, comprising a front wheel, a rear wheel, a front mudguard, a rear mudguard, and a front triangular frame and a rear triangular frame connected into one; the front triangular frame comprises a main tube (1), a branch tube (2) and a middle tube (3) connected triangularly; the rear triangular frame comprises a seat stay (4), a chain stay (5) and a middle stay (6) connected triangularly; the main tube (1) is arranged with a folding clasp (7) near the front wheel; the front triangular frame and rear triangular frame are connected through a rotating shaft (8) and a connector (9); the folding clasp (7) divides the main tube (1) into a battery compartment and a control compartment;; within the control compartment is a controller (11); the front wheel is arranged with a motor (16) at the hub; the motor (16) and controller (11) are electrically connected, so are the controller (11) and the battery pack within the battery holder (10);
**characterized in that**:
the battery compartment is arranged with a battery holder (10) of a similar shape and a battery pack is provided in the battery holder (10);
a battery cover (12) is arranged at the opening of the battery compartment; a control cover (13) is arranged at the opening of the control compartment; the battery cover (12) is fixed to the battery holder (10); on the battery cover (12) are a female terminal (14) and a charging input port (17); both the female terminal (14) and charging input port (17) are electrically connected to the battery pack in the battery holder (10); and
on the control cover (13) is a male tab (15) to be used with the female terminal (14); male tab (15) is electrically connected to the controller (11).

2. The tri-folding electric bicycle according to Claim 1, wherein the battery structure for the battery pack in the battery holder (10) is a dual-parallel and decuple-serial structure of 3.65V 18650 cells.

3. The tri-folding electric bicycle according to Claim 1, wherein a double-layer lithium-ion battery protection circuit is arranged on the top of the battery holder (10) to protect the battery pack circuit.

## Patentansprüche

1. Dreifach faltbares Elektrofahrrad, das ein Vorderrad, ein Hinterrad, ein vorderes Schutzblech, ein hinteres Schutzblech und einen vorderen Dreiecksrahmen und einen hinteren Dreiecksrahmen, die miteinander verbunden sind, umfasst; wobei der vordere Dreiecksrahmen ein Hauptrohr (1), ein Zweigrohr (2) und ein Mittelrohr (3) umfasst, die dreieckig miteinander verbunden sind; wobei der hintere Dreiecksrahmen eine Sitzstrebe (4), eine Kettenstrebe (5) und eine Mittelstrebe (6) umfasst, die dreieckig miteinander verbunden sind; wobei das Hauptrohr (1) in der Nähe des Vorderrads mit einer Faltschließe (7) versehen ist; wobei der vordere Dreiecksrahmen und der hintere Dreiecksrahmen durch eine Drehwelle (8) und ein Verbindungsstück (9) verbunden sind; wobei das Hauptrohr (1) durch die Faltschließe (7) in ein Batteriefach und ein Steuerfach unterteilt ist; wobei innerhalb des Steuerfachs ein Steuergerät (11) angeordnet ist; wobei das Vorderrad an der Nabe mit einem Motor (16) versehen ist; wobei der Motor (16) elektrisch mit dem Steuergerät (11) verbunden ist; wobei das Steuergerät (11) elektrisch mit einem Batteriepaket in einem Batteriehalter (10) verbunden ist;
**dadurch gekennzeichnet, dass**
innerhalb des Batteriefachs der Batteriehalter (10) angeordnet ist, der eine ähnliche Form wie das Batteriefach aufweist, wobei in dem Batteriehalter (10) das Batteriepaket angeordnet ist;
das Batteriefach an der Öffnung mit einer Batterieabdeckung (12) versehen ist, und das Steuerfach an der Öffnung mit einer Steuerabdeckung (13) versehen ist, wobei die Batterieabdeckung (12) fest mit dem Batteriehalter (10) verbunden ist, die Batterieabdeckung (12) mit einem Buchsenanschluss (14) versehen ist, und Batterieabdeckung (12) mit einem Ladeeingangsanschluss (17) versehen ist, wobei sowohl der Buchsenanschluss (14) als auch der Ladeeingangsanschluss (17) elektrisch mit dem Batteriepaket in dem Batteriehalter (10) verbunden sind; und
die Steuerabdeckung (13) mit einem Stiftanschluss (15) versehen ist, der mit dem Buchsenanschluss (14) zusammenwirkt, wobei der Stiftanschluss (15) elektrisch mit dem Steuergerät (11) verbunden ist.

2. Dreifach faltbares Elektrofahrrad nach Anspruch 1, **dadurch gekennzeichnet, dass** die Batteriestruktur des Batteriepakets in dem Batteriehalter (10) aus zwei parallel geschalteten Zellengruppen besteht, wobei jede der Gruppen zehn in Reihe geschaltete 3,65-V-Zellen von Typ 18650 umfasst.

3. Dreifach faltbares Elektrofahrrad nach Anspruch 1, **dadurch gekennzeichnet, dass** der Batteriehalter (10) an der Oberseite mit einer doppelschichtigen Lithium-Ionen-Batterieschutzschaltung versehen ist, um die Schaltung des Batteriepakets zu schützen.

## Revendications

1. Vélo électrique triplement pliant, comprenant une roue avant, une roue arrière, un garde-boue arrière, un garde-boue arrière et un cadre triangulaire avant et un cadre triangulaire arrière solidaires l'un à l'autre ; le cadre triangulaire avant comprenant un tuyau principal (1), un tuyau de dérivation (2) et un tuyau central (3) qui sont reliés pour former un triangle ; le cadre triangulaire arrière comprenant une fourche supérieure arrière (4), une fourche inférieure arrière (5) et une fourche centrale (6) qui sont reliés pour former un triangle ; le tuyau principal (1) étant muni d'une boucle pliante (7) à la position proche de la roue avant ; le cadre triangulaire avant et le cadre triangulaire arrière étant reliés par l'intermédiaire d'un arbre rotatif (8) et d'un élément de liaison (9) ; la boucle pliante (7) divisant le tuyau principal (1) en un compartiment à batterie et un compartiment de commande ; l'intérieur du compartiment de commande étant muni d'un contrôleur (11) ; l'essieu de la roue avant étant muni d'un moteur électrique (16) ; le moteur électrique (16) étant connecté électriquement au contrôleur (11) ; et le contrôleur (11) étant connectée électriquement à la batterie dans une boîte à batterie (10) ;
**caractérisé en ce que**,
l'intérieur du compartiment à batterie est muni de la boîte à batterie (10) dont la forme s'adapte à la forme du compartiment à batterie, et l'intérieur de la boîte à batterie (10) est muni d'une batterie ;
l'ouverture du compartiment à batterie est munie d'un couvercle de batterie (12), l'ouverture du compartiment de commande est munie d'un couvercle de commande (13), le couvercle de batterie (12) est relié de manière fixe à la boîte à batterie (10), le couvercle de batterie (12) est muni d'un ressort d'insertion (14), le couvercle de batterie (12) est muni d'un port d'entrée de recharge (17), et le ressort d'insertion (14) et le port d'entrée de recharge (17) sont tous connectés électriquement à la batterie dans la boîte à batterie (10) ;
le couvercle de commande (13) est muni d'une lame d'insertion (15) pour coopérer avec le ressort d'insertion (14), et la lame d'insertion (15) est connectée électriquement au contrôleur (11).

2. Vélo électrique triplement pliant selon la revendication 1, **caractérisé en ce que** : la batterie dans la boîte à batterie (10) présente une structure de batterie à cellules 18650 de 3,65 V comprenant deux cellules en parallèles et dix cellules en série.

3. Vélo électrique triplement pliant selon la revendication 1, **caractérisé en ce que** : l'extrémité supérieure de la boîte à batterie (10) est munie d'un circuit de protection de batterie au lithium à double couche pour protéger le circuit de la batterie.
